# EUROPEAN PATENT APPLICATION

(11) **EP 3 926 918 A1**
(43) Date of publication of application: **22.12.2021**
(21) Application number: 20878034.6
(22) Date of filing: 24.09.2020
(51) Int. Cl.: H04L 29/06

(54) **NETWORK ATTACK DEFENSE METHOD AND APPARATUS, DEVICE, SYSTEM AND STORAGE MEDIUM**

(30) Priority: 22.04.2020 CN 202010323534
(71) Applicant: Baidu Online Network Technology (Beijing) Co., Ltd, Beijing 100085 (CN)
(72) Inventor: ZHAO, Zhongshu, Beijing 100085 (CN); XIE, Yizhi, Beijing 100085 (CN); XU, Lichen, Beijing 100085 (CN)
(74) Representative: Poskett, Oliver James
(86) International application number: PCT/CN2020/117457
(87) International publication number: WO 2021/212739

(57) **Abstract**

The present application discloses a network attack defense method, an apparatus, a device, a system and a storage medium, which relate to the field of network security. The specific implementation solution is: detecting a domain name resolution request initiated by a browser when determining that the browser initiates an access request, where the access request is used to indicate to access a platform to be accessed, and the domain name resolution request includes a domain name of the platform to be accessed; and intercepting the access request when determining that the domain name of the platform to be accessed matches a preset attack platform feature library, where the attack platform feature library is used to indicate a domain name of at least one attack platform. The attack platform and a XSS attack can be performed accurately, and the access request can be directly intercepted to prevent malicious codes from triggering the terminal device to send the access request to the attack platform, thereby avoiding getting the attack logic returned by the attack platform, and effectively processing and preventing the XSS attack.

## Description

The present application claims priority of Chinese Patent Application No. 202010323534.3, filed to the China National Intellectual Property Administration on April 22, 2020 and entitled "Network Attack Defense Method, Apparatus, Device, System and Storage Medium", the disclosure of which is hereby incorporated by reference in its entirety.

### TECHNICAL FIELD

The present application relates to the field of network security in the field of computer technology and, in particular, to a network attack defense method, an apparatus, a device, a system and a storage medium.

### BACKGROUND

Network security is a very important part of the computer application process, and a cross site scripting (Cross Site Scripting, XSS for short) attack often occurs.

In the prior art, an attacker injects a malicious code into a web page through an XSS attack; and when a web page is triggered to browse, the malicious code is triggered to attack a terminal device, and then carry out attacks such as stealing user information and plugging a trojan horse within a website.

Therefore, how to accurately and effectively process and prevent the XSS attack accurately is an urgent problem to be solved.

### SUMMARY

A network attack defense method, an apparatus, a device, a system and a storage medium is provided for accurately and effectively processing and preventing a XSS attack for the XSS attack accurately.

According to a first aspect, there is provided a network attack defense method which includes:
detecting a domain name resolution request initiated by a browser when determining that the browser initiates an access request, where the access request is used to indicate to access a platform to be accessed, and the domain name resolution request includes a domain name of the platform to be accessed; and
intercepting the access request when determining that the domain name of the platform to be accessed matches a preset attack platform feature library, where the attack platform feature library is used to indicate a domain name of at least one attack platform.

According to a second aspect, there is provided a network attack defense device which includes:
a detecting unit, configured to detect a domain name resolution request initiated by a browser when determining that the browser initiates an access request, where the access request is used to indicate to access a platform to be accessed, and the domain name resolution request includes a domain name of the platform to be accessed; and
an intercepting unit, configured to intercept the access request when determining that the domain name of the platform to be accessed matches a preset attack platform feature library, where the attack platform feature library is used to indicate the domain name of at least one attack platform.

According to a third aspect, there is provided a defense method for network attacks which includes:
detecting a domain name resolution request initiated by a browser when determining that the browser initiates an access request, where the access request is used to indicate to access a platform to be accessed, and the domain name resolution request includes a domain name of the platform to be accessed; and
performing attack defense processing when determining that the domain name of the platform to be accessed matches a preset attack platform feature library, where the attack platform feature library is used to indicate a domain name of at least one attack platform.

According to a fourth aspect, there is provided an electronic device which includes:
a processor and a memory; and executable instructions of the processor are stored in the memory; where the processor is configured to execute, by executing the executable instructions, the network attack defense method according to any one of the first aspect or execute the network attack defense method according to the third aspect.

According to a fifth aspect, there is provided a non-transitory computer-readable storage medium having stored therein computer instructions, when executed by a processor, implementing the network attack defense method according to any one of the first aspect or executing the network attack defense method according to the third aspect.

According to a sixth aspect, there is provided a program product which includes: a computer program stored in a readable storage medium, where at least one processor of a server can read the computer program from the readable storage medium, and the at least one processor executes the computer program to cause the server to execute the network attack defense method according to any one of the first aspect or the network attack defense method according to the third aspect.

According to a seventh aspect, there is provided a network attack defense system, where the system includes the electronic device according to the fourth aspect and a domain name system server;
where the electronic device is configured to detect a domain name resolution request initiated by a browser when determining that the browser initiates an access request, where the access request is used to indicate to access a platform to be accessed and the domain name resolution request includes a domain name of the platform to be accessed, and to send the domain name resolution request to the domain name system server;
the domain name system server is configured to generate a processing result according to the domain name resolution request, where the processing result represents that the domain name of the platform to be accessed matches a preset attack platform feature library, and the domain name system server is configured with the attack platform feature library; and
the electronic device is further configured to receive the processing result sent by the domain name system server, and intercept the access request according to the processing result.

According to an eighth aspect, there is provided a computer program, having program codes therein, when run by a computer, causing the program codes to execute the network attack defense method according to any one of the first aspect or to execute the network attack defense method according to the third aspect.

According to the technical solution of the present application, when the access request is detected, the access request is not sent directly. If the web page of the terminal device has been injected with a malicious code, the malicious code will send an access request to the attack platform, and then the terminal device will obtain the attack logic of the attack platform. When an access request is detected, the domain name of the platform to be accessed in the domain name resolution request is firstly detected; when it is determined that the domain name of the platform to be accessed matches the attack platform feature library, the domain name carried in the domain name resolution request is determined to be the domain name of the attack platform, the platform to be accessed is determined to be the attack platform, and the attack platform and the XSS attack can be performed accurately. In this case, since the platform to be accessed is an attack platform, the access request will be sent to the attack platform, thereby making the attack platform attack the terminal device. To avoid this, the terminal device directly intercepts the access request to prevent malicious code from triggering the terminal device to send the access request to the attack platform, thereby avoiding getting the attack logic returned by the attack platform, and effectively processing and preventing the XSS attack.

It should be understood that the content described here is not intended to identify the key or important features of the embodiments of the present application, nor is it intended to limit the scope of the present application. Other features of the present application will be easily understood through the following description.

### BRIEF DESCRIPTION OF THE DRAWINGS

The accompanying drawings are used to better understand the solution and do not constitute a limitation to the present application. Where:
FIG. 1 is a schematic diagram of an application scenario of an embodiment of the present application;
FIG. 2 is a schematic diagram of another application scenario of an embodiment of the present application;
FIG. 3 is a schematic diagram according to Embodiment I of the present application;
FIG. 4 is a schematic diagram of a further application scenario of an embodiment of the present application;
FIG. 5 is a schematic diagram of yet another application scenario according to an embodiment of the present application;
FIG. 6 is a schematic diagram according to Embodiment II of the present application;
FIG. 7 is a schematic diagram of Embodiment III according to the present application;
FIG. 8 is a schematic diagram of a pop-up window interface provided by an embodiment of the present application;
FIG. 9 is a schematic diagram of Embodiment IV according to the present application;
FIG. 10 is a schematic diagram of Embodiment V according to the present application;
FIG. 11 is a schematic diagram of Embodiment VI according to the present application;
FIG. 12 is a schematic diagram of Embodiment VII according to the present application;
FIG. 13 is a schematic diagram of Embodiment VIII according to the present application; and
FIG. 14 is a schematic diagram of Embodiment IX according to the present application.

### DESCRIPTION OF EMBODIMENTS

Exemplary embodiments of the present application are described below with reference to the accompanying drawings, which include various details of the embodiments of the present application for ease of understanding, which should be considered as merely exemplary. Therefore, those of ordinary skilled in the art should realize that various changes and modifications can be made to the embodiments described herein without departing from the scope and spirit of the present application. Likewise, for clarity and conciseness, descriptions of well-known functions and structures are omitted in the following description.

Network security is a very important part of the computer application process, and XSS attack often occurs. An attacker injects a malicious code into a web page through an XSS attack; and when a web page is triggered to browse, the malicious code is triggered to attack a terminal device, and then carry out attacks such as stealing user information and plugging a trojan horse within a website.

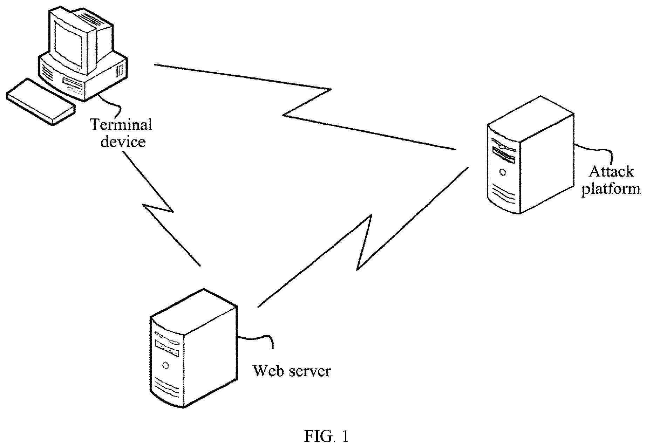

Exemplarily, FIG. 1 is a schematic diagram of an application scenario of an embodiment of the present application. As shown in FIG. 1, the attack platform attacks a web server, and the attack platform writes a malicious code in the web page to be sent to the terminal device in the web page server. The terminal device sends a browsing request to the web server, and then obtains and displays the web page returned by the web server. At this time, the malicious code in the web page will be triggered to attack the terminal device such as stealing information and plugging a trojan horse within the website. In the process of attacking the terminal device by the malicious code, the malicious code will trigger the terminal device to access the attack platform, which in turn makes the attack platform directly attack the terminal device.

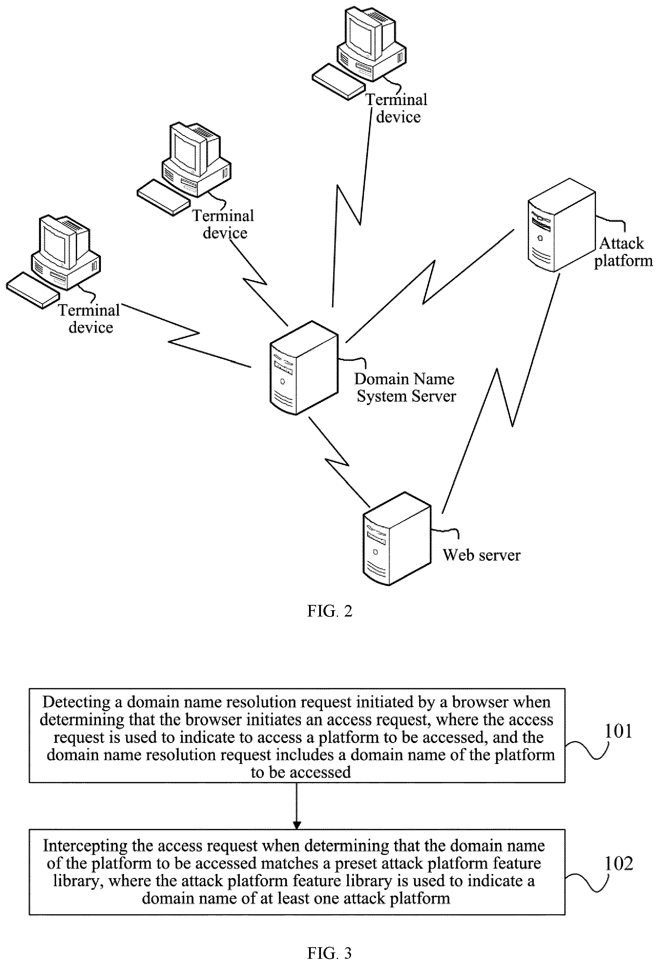

Exemplarily, FIG. 2 is a schematic diagram of another application scenario of an embodiment of the present application. As shown in FIG. 2, in the office network scenario, there are multiple terminal devices, each terminal device communicates with a domain name system (Domain Name System, DNS) server, and the domain name system server communicates with other external servers. Therefore, there are interconnections between various terminal devices, and there are a large number of highly confidential world wide web (World Wide Web, WEB) systems. Once the attack platform attacks the web server, the attack platform writes malicious code in the web page to be sent to the terminal device in the web page server. One terminal device sends a browsing request to a web page server through a domain name system server, and the domain name system server firstly receives a web page returned by the web page server; in this way, each terminal device may receive the web page, and then each terminal device has the malicious code in the web page, and each terminal device is attacked, causing serious consequences. In the process of attacking the terminal device by the malicious code, the malicious code will trigger the domain name system server to access the attack platform, which in turn makes the attack platform directly attack the domain name system server. Further, the attack platform attacks the terminal device through the domain name system server.

Where the above attack platform can also be called an attack device.

In an example, after the terminal device obtains the web page returned by the web server, the malicious code in the web page will trigger the terminal device to send a hyper text transfer protocol (Hyper Text Transfer Protocol, http) request to the attack platform, and then request the attack logic of the attack platform; the attack platform returns the attack logic of the attack platform to the terminal device; and the terminal device attacks the information in the terminal device according to the obtained attack logic, such as stealing user information, hanging the website, etc., thereby realizing XSS attack of the attack platform on the terminal device. Where the part of malicious code that performs harmful or malicious functions is called payload.

According to the above introduction, it is known that it will do great harm to the terminal device and the LAN where the terminal device is located when the XSS attack occurs. It is urgent to process XSS attack effectively and detect it accurately.

In an example, in order to detect and prevent XSS attacks, after the terminal device obtains the web page sent by the web server, the malicious code in the web page triggers the terminal device to send an http request to the attack platform; the terminal device can detect a keyword in the http request which can carry the keyword input by the user; and the terminal device determines whether the terminal device has an XSS attack according to the keyword in the http request, and then processes the XSS attack.

However, in this way, the terminal device already has malicious code; before the http request reaches the server, the malicious code can replace the keywords in the http request, so that the terminal device cannot detect whether an XSS attack has occurred. The malicious code will still trigger the terminal device to send an http request to the attack platform; the attack platform returns the attack logic of the attack platform to the terminal device; and the terminal device attacks information in the terminal device according to the obtained attack logic. It can be seen that the above keyword detection method still cannot accurately and effectively process and prevent XSS attack. Moreover, in the above keyword detection method, these keywords are input by the user, because the malicious code can replace keywords in http requests, it will pollute user input.

After creative labor, the inventor of the present application got the inventive idea of the present application: realizing accurate and effective process and prevention for the XSS attack accurately.

The technical solutions of the present application and how the technical solutions of the present application solve the above technical problems are described in detail below with specific embodiments. The following specific embodiments can be combined with each other, and the same or similar concepts or processes may not be repeated in some embodiments. The embodiments of the present application will be described below in conjunction with the accompanying drawings.

FIG. 3 is a schematic diagram according to Embodiment I of the present application. As shown in FIG. 3, the network attack defense method provided by this embodiment includes:

S101, detecting a domain name resolution request initiated by a browser when determining that the browser initiates an access request, where the access request is used to indicate to access a platform to be accessed, and the domain name resolution request includes a domain name of the platform to be accessed.

Exemplarily, an execution subject of this embodiment may be a terminal device, or other apparatus or device that can execute the method of this embodiment. In this embodiment, the execution subject is the terminal device for description.

A browser is installed in the terminal device, and the user triggers the browser of the terminal device, and then the terminal device initiates an access request. At this time, the browser of the terminal device also initiates an access request; and the access request is used to indicate to access the platform to be accessed. In an example, the user can trigger the browser of the terminal device through voice, gesture, user interface, etc. In an example, the platform to be accessed may be a server to be accessed or other terminal devices to be accessed.

For example, the user can input the domain name of the platform to be accessed in the browser to trigger the browser to access, and then the terminal device generates an access request.

For another example, the attack platform has attacked the web server, and the attack platform entered malicious code in the web page; and then the web server sends the web page with the malicious code to the terminal device, Furthermore, the terminal device will initiate an access request to the attack platform through the malicious code in the web page. At this time, the access request is automatically generated by the terminal device. That is, the malicious code triggers the terminal device to access the attack platform.

If the terminal device directly sends the access request, since the terminal device has been attacked by the malicious code, the terminal device will send the access request to the attack platform, and the attack platform will send the attack logic of the attack platform to the terminal device; and the terminal device attacks the information in the terminal device according to the obtained attack logic. Therefore, in order to prevent the terminal device from being maliciously attacked, in this embodiment, before the terminal device sends an access request, it is necessary to complete detection and handling firstly.

In this embodiment, the terminal device firstly generates and initiates a domain name resolution request before sending an access request; and in the internal implementation process of the terminal device, since it is necessary for the browser to initiate an access request, the browser also initiates a domain name resolution request. The domain name of the platform to be accessed is written in the domain name resolution request; and the domain name resolution request is used to indicate the request for resolution of the domain name of the platform to be accessed.

In an example, the domain name resolution request is composed of multiple fields, and one of the multiple fields has a character string that represents the domain name of the platform to be accessed.

S102, intercepting the access request when determining that the domain name of the platform to be accessed matches a preset attack platform feature library, where the attack platform feature library is used to indicate a domain name of at least one attack platform.

Exemplarily, the terminal device detects the domain name resolution request initiated by the browser to determine whether the domain name carried in the domain name resolution request is the domain name of the attack platform.

The attack platform feature library can indicate the domain name of at least one attack platform; the terminal device can determine whether the domain name carried in the domain name resolution request is the domain name of the attack platform according to an attack platform feature library, so as to determine whether the platform to be accessed is an attack platform. If the terminal device determines that the domain name carried in the domain name resolution request is the domain name of the attack platform, it is determined that the platform to be accessed is the attack platform. If the terminal device determines that the domain name carried in the domain name resolution request is not the domain name of the attack platform, it is determined that the platform to be accessed is not the attack platform.

In an example, an attack platform feature library is pre-stored in the terminal device, and the attack platform feature library includes the domain name of each attack platform. That is, the attack platform feature library includes a blacklist, which is the domain name of each attack platform. The terminal device compares the domain name of the platform to be accessed with the attack platform feature library. If the terminal device determines that the domain name of the platform to be accessed exists in the attack platform feature library, it is determined that the domain name of the platform to be accessed matches the preset attack platform feature library and the platform to be accessed is an attack platform. If the terminal device determines that the domain name of the platform to be accessed does not exist in the attack platform feature library, it is determined that the domain name of the platform to be accessed does not match the preset attack platform feature library and the platform to be accessed is not an attack platform.

In another example, an attack platform feature library is pre-stored in the terminal device, and the attack platform can include the domain name of each non-attack platform, that is, the attack platform feature library includes a whitelist, which is the domain name of each non-attack platform. The terminal device compares the domain name of the platform to be accessed with the attack platform feature library. If the terminal device determines that the domain name of the platform to be accessed does not exist in the attack platform feature library, it is determined that the domain name of the platform to be accessed matches the preset attack platform feature library and the platform to be accessed is an attack platform. If the terminal device determines that the domain name of the platform to be accessed exists in the attack platform feature library, it is determined that the domain name of the platform to be accessed does not match the preset attack platform feature library and the platform to be accessed is not an attack platform.

If the terminal device determines that the domain name carried in the domain name resolution request is the domain name of the attack platform, it is determined that the platform to be accessed is the attack platform and the access request in step S101 is intercepted and the access request is not sent. In this case, since the platform to be accessed is an attack platform, the access request will be sent to the attack platform, making the attack platform attack the terminal device; to avoid this, when determining that the domain name of the platform to be accessed matches the attack platform feature library, the terminal device directly determines that the access request is to access the attack platform and can intercept the access request to prevent malicious code from triggering the terminal device to send the access request to the attack platform.

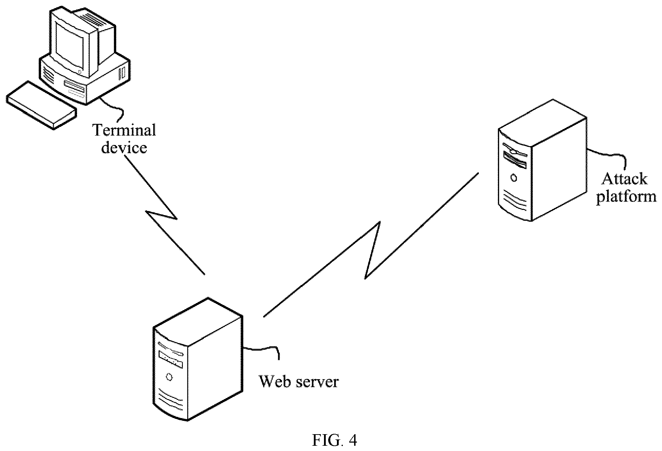

FIG. 4 is a schematic diagram of a further application scenario of an embodiment of the present application. As shown in FIG. 4, in a non-office application scenario, the terminal device will not send the access request directly to the attack platform, thereby blocking the direct communication between the terminal device and the attack platform, preventing the terminal device from executing the attack logic after the attack platform returns the attack logic to the terminal device, and then preventing the attack platform from attacking the terminal device through the attack logic.

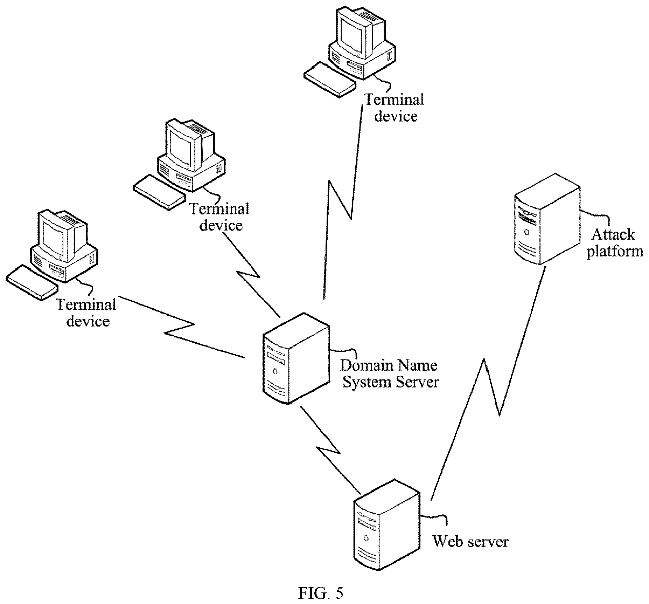

FIG. 5 is a schematic diagram of yet another application scenario according to an embodiment of the present application. As shown in FIG. 5, in the office application scenario, the terminal device will not send the access request to the attack platform through the domain name system server, thereby blocking the direct communication between the domain name system server and the attack platform, preventing the domain name system server from executing the attack logic after the attack platform returns the attack logic to the domain name system server, and then preventing the attack platform from attacking the domain name system server and various terminal devices through the attack logic.

In this embodiment, when it is determined that the browser initiates an access request, the domain name resolution request initiated by the browser is detected firstly, instead of sending out the access request directly, where the access request is used to indicate to access a platform to be accessed, and the domain name resolution request includes a domain name of the platform to be accessed. The access request is intercepted when determining that the domain name of the platform to be accessed matches the preset attack platform feature library, where the attack platform feature library is used to indicate the domain name of at least one attack platform. When the access request is detected, the access request is not sent out directly. If the web page of the terminal device has been entered with a malicious code, the malicious code will send the access request to the attack platform, and then the terminal device will get the attack logic of the attack platform. When an access request is detected, the domain name of the platform to be accessed in the domain name resolution request is firstly detected; when it is determined that the domain name of the platform to be accessed matches the attack platform feature library, the domain name carried in the domain name resolution request is determined to be the domain name of the attack platform, the platform to be accessed is determined to be the attack platform, and the attack platform and the XSS attack can be performed accurately. In this case, since the platform to be accessed is an attack platform, the access request will be sent to the attack platform, thereby making the attack platform attack the terminal device. To avoid this, the terminal device directly intercepts the access request to prevent malicious code from triggering the terminal device to send the access request to the attack platform, thereby avoiding getting the attack logic returned by the attack platform, and effectively processing and preventing the XSS attack.

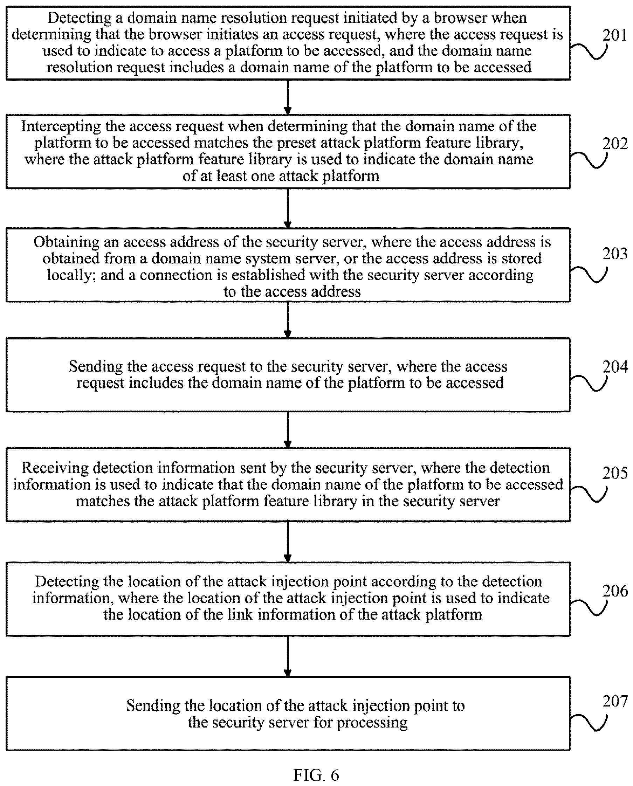

FIG. 6 is a schematic diagram according to Embodiment II of the present application. As shown in FIG. 6, the network attack defense method provided in this embodiment includes:
S201, detecting a domain name resolution request initiated by a browser when determining that the browser initiates an access request, where the access request is used to indicate to access a platform to be accessed, and the domain name resolution request includes a domain name of the platform to be accessed.

Exemplarily, the execution subject of this embodiment may be a terminal device, or other apparatus or device that can execute the method of this embodiment. In this embodiment, the execution subject is the terminal device for description.

For this step, refer to step S101 shown in FIG. 3, which will not be repeated herein.

S202, intercepting the access request when determining that the domain name of the platform to be accessed matches the preset attack platform feature library, where the attack platform feature library is used to indicate the domain name of at least one attack platform.

In an example, step S202 specifically includes the following implementations:
in the first implementation of step S202, a domain name resolution request is sent to a domain name system server, where the domain name system server is configured with an attack platform feature library; and the processing result sent by the domain name system server is received, where the processing result represents that the domain name of the platform to be accessed matches the preset attack platform feature library; and the access request is intercepted according to the processing result.

In the second implementation of step S202, when determining that the domain name of the platform to be accessed exists in the attack platform feature library, it is determined that the domain name of the platform to be accessed matches the attack platform feature library, and the access request is intercepted.

Exemplarily, in order to accurately recognize whether the platform to be accessed is an attack platform, it is necessary to compare the domain name of the platform to be accessed in the domain name resolution request with the attack platform feature library.

In an example, the terminal device stores an attack platform feature library, and the attack platform feature library may indicate the domain name of at least one attack platform. The attack platform feature library in the terminal device may be sent to the terminal device by other servers. The attack platform feature library is stored in the terminal device, which facilitate the terminal device to directly compare the domain name in the domain name resolution request with the attack platform feature library. After detecting the domain name resolution request, the terminal device matches the domain name in the domain name resolution request with the attack platform feature library. If it is determined that the domain name carried in the domain name resolution request does not match the attack platform feature library, it is determined that the platform to be accessed is not an attack platform; if it is determined that the domain name carried in the domain name resolution request matches the attack platform feature library, it is determined that the platform to be accessed is the attack platform, and then the terminal device directly intercepts the access request.

For example, the terminal device is configured with a DNS hijacking module, which is used to store the attack platform feature library. The attack platform feature library includes a blacklist, which is the domain name of each attack platform; the terminal device compares the domain name of the platform to be accessed with the attack platform feature library; if the terminal device determines that the domain name of the platform to be accessed exists in the attack platform feature library, it is determined that the domain name of the platform to be accessed matches the preset attack platform feature library and the platform to be accessed is an attack platform.

In another example, when detecting that the browser initiates an access request, the terminal device does not send the access request firstly, but detect the domain name resolution request initiated by the browser; and then the terminal device sends the domain name resolution request to the domain name system server.

An attack platform feature library is configured in the domain name system server, and the attack platform feature library indicates the domain name of at least one attack platform. In this case, when multiple terminal devices communicate with other devices through a domain name system server, the attack platform feature library is set in the domain name system server, so that the domain name system server controls multiple terminal devices. The domain name system server compares the domain name in the domain name resolution request with the attack platform feature library, which can reduce the actions of each terminal device. For example, the attack platform feature library includes a blacklist, which is the domain name of each attack platform, and then the attack platform feature library indicates the domain name of at least one attack platform. Alternatively, the attack platform feature library includes a whitelist, which is the domain name of each non-attack platform, and the attack platform feature library indicates the domain name of at least one non-attack platform, so that the attack platform feature library indirectly indicates the domain name of at least one attack platform.

After receiving the domain name resolution request, the domain name system server analyzes the domain name of the platform to be accessed in the domain name resolution request and the attack platform feature library. If it is determined that the domain name of the platform to be accessed matches the attack platform feature library, it can be determined that the platform to be accessed is an attack platform; if it is determined that the domain name of the platform to be accessed does not match the attack platform feature library, it can be determined that the platform to be accessed is not an attack platform.

For example, the attack platform feature library includes a blacklist, which is the domain name of each attack platform; and the domain name system server compares the domain name of the platform to be accessed with the attack platform feature library. If the domain name system server determines that the domain name of the platform to be accessed exists in the attack platform feature library, it is determined that the domain name of the platform to be accessed matches the preset attack platform feature library and the platform to be accessed is an attack platform. If the domain name system server determines that the domain name of the platform to be accessed does not exist in the attack platform feature library, it is determined that the domain name of the platform to be accessed does not match the preset attack platform feature library and the platform to be accessed is not an attack platform.

For another example, the attack platform feature library includes a whitelist, which is the domain name of each non-attack platform; and the domain name system server compares the domain name of the platform to be accessed with the attack platform feature library. If the domain name system server determines that the domain name of the platform to be accessed does not exist in the attack platform feature library, it is determined that the domain name of the platform to be accessed matches the preset attack platform feature library and the platform to be accessed is an attack platform. If the domain name system server determines that the domain name of the platform to be accessed exists in the attack platform feature library, it is determined that the domain name of the platform to be accessed does not match the preset attack platform feature library and the platform to be accessed is not an attack platform.

In an example, the domain name system server is configured with a DNS hijacking module which is used to store the attack platform feature library.

After comparing the domain name of the platform to be accessed with the attack platform feature library, the domain name system server can generate a processing result; when determining that the domain name of the platform to be accessed matches the attack platform feature library, the processing result represents that the domain name of the platform to be accessed matches the preset attack platform feature library, at the same time, the processing result represents the platform to be accessed is an attack platform. When determining that the domain name of the platform to be accessed does not match the attack platform feature library, the processing result represents that the domain name of the platform to be accessed does not match the preset attack platform feature library, at the same time, the processing result represents the platform to be accessed is not an attack platform.

The domain name system server sends the processing result to the terminal device. In this case, the processing result represents that the domain name of the platform to be accessed matches the attack platform feature library; in this case, since the platform to be accessed is an attack platform, which will send the access request to the attack platform, making the attack platform attack the terminal device. To avoid this situation, when determining that the domain name of the platform to be accessed matches the attack platform feature library, is the terminal device directly determines that the access request is to access the attack platform and can directly intercept the access request to prevent the malicious code from triggering the terminal device to send the access request to the attack platform.

In an example, the above attack platform feature library can be continuously updated to update and enrich the attack platform feature library. For example, during the operation processes of a corporate office network or other WEB systems, if the background device monitors abnormalities and the latter detects that the attack platform has attacked the terminal device, the back-end device can add the domain name of the attack platform to the attack platform feature library, which achieves the continuous update and enrichment of the attack platform feature library, thereby being conducive to effective defense against various types of attack platforms.

S203, obtaining an access address of the security server, where the access address is obtained from a domain name system server, or the access address is stored locally; and a connection is established with the security server according to the access address.

Exemplarily, after step S202, the terminal device has preliminarily determined that the platform to be accessed is an attack platform, but further confirmation is also required and defense against possible subsequent attacks should be available. Therefore, the terminal device needs to access a security (SinkHole) server to further confirm the platform to be accessed with the joint security server and defend against possible subsequent attacks.

In order to access the security server, the access address of the security server needs to be known.

In step S202, if the attack platform feature library is set in the terminal device, the terminal device can directly determine that the platform to be accessed is the attack platform according to the attack platform feature library. The access address of the security server is then determined according to the locally pre-stored address library, where the access address of the security server is stored in the address library. The terminal device then establishes a connection with the security server according to the access address to facilitate subsequent access to the security server.

Alternatively, if the attack platform feature library is set in the domain name system server, and the domain name system server can directly determine that the platform to be accessed is the attack platform according to the attack platform feature library, the domain name system server can determine, according to the address library stored in the domain name system server, the access address of the security server. And then the domain name system server sends the access address of the security server to the terminal device. The terminal device then establishes a connection with the security server according to the access address to facilitate subsequent access to the security server.

S204, sending the access request to the security server, where the access request includes the domain name of the platform to be accessed.

Exemplarily, in order to perform further identification and confirmation on the platform to be accessed to confirm whether the platform to be accessed is a real attack platform, the terminal device may send an access request to the security server, where the access request carries the domain name of the platform to be accessed.

S205, receiving detection information sent by the security server, where the detection information is used to indicate that the domain name of the platform to be accessed matches the attack platform feature library in the security server.

In an example, the access request further includes indication information which is used for the source of the access request; and the detection information is also used to indicate that the domain name of the access request is not input by the user.

In an example, the detection information is also used to indicate detecting the script code of the location of the attack injection point.

Exemplarily, after step S204, after the security server receives the access request, since the security server can be configured with the above attack platform feature library, the security server can analyze the domain name in the access request again. If it is determined that the domain name carried in the access request does not match the attack platform feature library, it is determined that the platform to be accessed is not an attack platform, and the security server can generate detection information. In this case, the detection information represents that the domain name of the platform to be accessed does not match the attack platform feature library in the security server, and the detection information indirectly represents that the platform to be accessed is not an attack platform. If it is determined that the domain name carried in the access request matches the attack platform feature library, it is determined that the platform to be accessed is the attack platform, and the security server can generate detection information. In this case, the detection information represents that the domain name of the platform to be accessed matches the attack platform feature library in the security server, and the detection information indirectly represents that the platform to be accessed is an attack platform.

Since the security server is different from the terminal device and the domain name system server, after the terminal device or the domain name system server detects the domain name of the platform to be accessed, the security server detects the domain name of the platform to be accessed for another time. The two detections before and after can ensure the accurate detection of the domain name and ensure that whether the platform to be accessed is an attack platform can be accurately detected. In addition, whether the security server is the attacked server further ensures that it is accurately detected whether the platform to be accessed is an attack platform.

In an example, in addition to carrying the domain name of the platform to be accessed, the access request may also carry indication information, which may indicate the source of the access request. The source of the access request, for example, is triggered by the user or automatically triggered by the malicious code. For example, the access request includes a field with a domain name and a field indicating information; and the domain name may be a field which is host in the access request. The indication information is a field which is referer in the access request. If the field which is referer is empty, it indicates that the domain name of the access request is input by the user, that is, it indicates that the access request is triggered by the user. If the field which is referer is not empty, it indicates that the domain name of the access request is not input by the user, that is, it indicates that the access request is not triggered by the user. In this case, the access request is automatically triggered by other codes, or even the malicious code.

In order to ensure a more accurate detection of the domain name of the platform to be accessed in the access request, the terminal device will send the access request carrying the domain name of the platform to be accessed and the indication information to the security server. The security server analyzes the indication information and domain name in the access request. If it is determined that the indication information represents that the domain name of the access request is not input by the user, it can be thus determined that the access request is not triggered by the user, that is, the access request is triggered by the malicious code; and it is also determined that the domain name of the platform to be accessed in the access request matches the attack platform feature library. In this case, the domain name of the platform to be accessed is the domain name of the attack platform, the access request is triggered by the malicious code, the security server can accurately determine that the terminal device has the malicious code, and then the platform to be accessed is determined to be the attack platform.

Afterwards, the security server sends detection information to the terminal device, and the detection information represents that the domain name of the platform to be accessed matches the attack platform feature library in the security server. Moreover, in order to inform the terminal device that the access request is not triggered by the user, the detection information is also required to indicate that the domain name of the access request is not input by the user, that is, the access request is automatically triggered by the malicious code.

In an example, in order to facilitate the terminal device to detect the location of the attack injection point, the security server may also return a script code to the terminal device, and the script code is used to detect detect the location of the attack injection point. In order to save signaling overhead, when the security server sends detection information to the terminal device, the detection information is used to indicate the script code for detecting the location of the attack injection point. In addition, the script code can also be used to indicate that the browser of the terminal device is under XSS attack. The script code can also be called JavaScript (JS) script code.

In an example, the access request may be an access request of the https protocol or an access request of the http protocol; an access request of the https protocol is referred to as an https request for short; and an access request of the https protocol is referred to as an http request for short.

The terminal device sends an http request to the security server, and the security server can directly parse the http request.

The terminal device sends an https request to the security server, the security server needs to shake hands with the terminal device, and then the security server extracts the server domain name (ServerName) in the handshake packet (tls handshake). In addition, the security server generates a false sub-certificate for the server domain name based on the CA root certificate, and then obtains false certificate information; and the security server returns the false certificate information to the terminal device. In this case, the terminal device and the security server can complete handshake of the https protocol, and then, the security server parses the https request again.

S206, detecting the location of the attack injection point according to the detection information, where the location of the attack injection point is used to indicate the location of the link information of the attack platform.

In an example, step S207 specifically includes: generating the location of the attack injection point when the link information of the attack platform is searched from the DOM tree of the web page according to the link information set; where the link information set includes link information of at least one attack platform, and the DOM tree includes link information of at least one platform.

In an example, the link information includes the uniform resource locator of the platform. The location of the attack injection point is specifically used to indicate the location of the uniform resource locator of the attack platform in the document object model tree of the web page.

Exemplarily, since the detection information can indicate that the domain name of the platform to be accessed matches the attack platform feature library in the security server, the terminal device can thus determine that the browser of the terminal device is attacked by the attack platform. Moreover, since the detection information also indicates that the domain name of the access request is not input by the user, the terminal device may determine, with even greater certainty, that the browser is attacked by the attack platform, and then, the terminal device can directly detect the location of the attack injection point.

Alternatively, since the detection information indicates the script code for detecting the location of the attack injection point, the terminal device can learn the code logic that how to detect the location of the attack injection point, and then detect the location of the attack injection point.

In an example, in order to facilitate the terminal device to detect location of the injection point, a link information set is stored in the terminal device, and the link information set includes link information of each attack platform. In addition, the web page has a document object model tree (Document Object Model, DOM), and the DOM tree has link information of various platforms that can be normal non-attack platforms and attack platforms. Therefore, the terminal device can search, from the DOM tree of the web page, whether there is the link information of the attack platform in the link information set in the DOM tree. If the link information of the attack platform in the link information set is searched in the DOM tree, the terminal device can determine that the location of the attack injection point is found. It can be seen that the location of the attack injection point indicates the location of the link information of the attack platform in the DOM tree. It should be noted that the link information of the attack platform in the DOM tree is not necessarily the link information of the platform to be accessed in the access request.

For example, the link information set includes link information of attack platform A, link information of attack platform B, and link information of attack platform C. The DOM tree has link information of platform D, link information of platform E, link information of platform F, link information of platform A, and link information of platform B. By searching the DOM tree, the terminal device can determine that there are the link information of attack platform A and the link information of attack platform B in the DOM tree, and then detect the location of the attack injection point of attack platform A and the location of the attack injection point of attack platform B. It should be noted that the platform to be accessed indicated by the access request may be attack platform A, or attack platform B, or other attack platforms, or other normal platforms.

In an example, the above link information includes a uniform resource locator system (uniform resource locator, URL); further, the location of the attack injection point refers to the location of the URL of the attack platform in the DOM tree.

For example, the link information set includes the URL of each attack platform, and the DOM tree includes the URL of at least one platform; the terminal device can search, from the DOM tree of the web page, whether there is the URL of the attack platform in the link information set in the DOM tree. If the URL of the attack platform in the link information set is searched in the DOM tree, the terminal device can determine that the location of the attack injection point is found. It can be seen that the location of the attack injection point indicates the location of the URL of the attack platform in the DOM tree.

Since the URL is the unique identifier of the platform for each platform, and the URL of the platform has been accessed will be recorded in the DOM tree, the URL is used to detect the location of the attack platform that is attacking the terminal device, and the location of the attack injection point can be detected accurately.

S207, sending the location of the attack injection point to the security server for processing.

Exemplarily, after detecting the location of the attack injection point, the terminal device sends the location of the attack injection point to the security server for processing. The security server can inform the management user of the location of the attack injection point, and then the management user can check the attack injection point to eliminate the attack problem.

In this embodiment, on the basis of the above embodiment, after initially determining that the domain name of the platform to be accessed matches the attack platform feature library and intercepting the access request, the access request is sent to the security server. This allows the security server to further confirm whether the platform to be accessed is a real attack platform. The security server analyzes the indication information and domain name in the access request. If it is determined that the indication information represents that the domain name of the access request is not input by the user, it can be determined that the access request is not triggered by the user, that is, the access request is triggered by the malicious code. And it can be determined that the domain name of the platform to be accessed in the access request matches the attack platform feature library. The security server sends detection information to the terminal device; and the terminal device quickly detects the location of the attack injection point, and then sends the location of the attack injection point to the security server for processing. Therefore, it can be accurately determined that the platform to be accessed is an attack platform, and accurately detected the location of the attack injection point, and then the attack injection point can be processed.

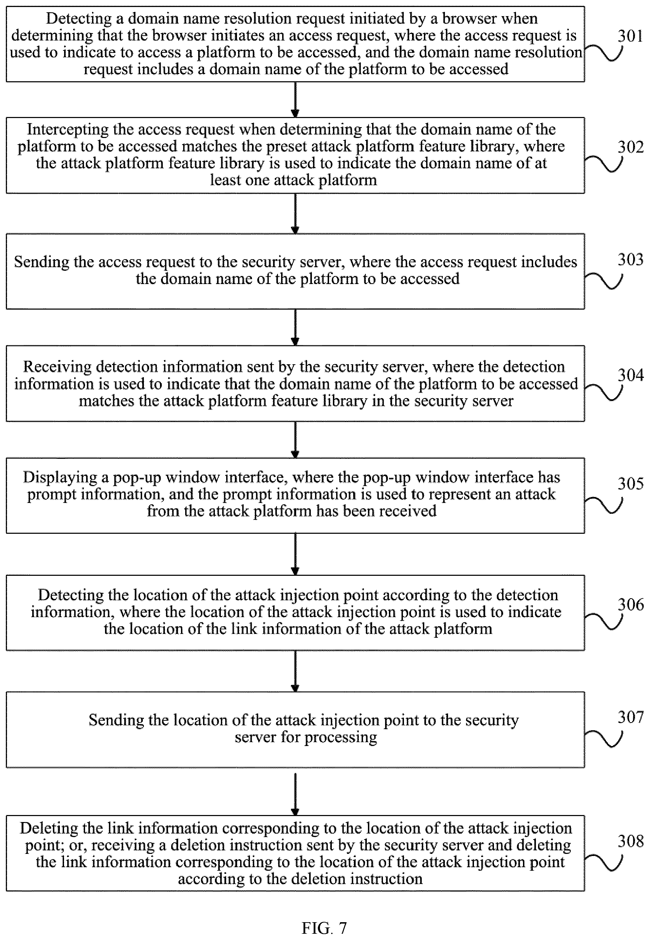

FIG. 7 is a schematic diagram of Embodiment III according to the present application. As shown in FIG. 7, the network attack defense method of provided by this embodiment includes:

S301, detecting a domain name resolution request initiated by a browser when determining that the browser initiates an access request, where the access request is used to indicate to access a platform to be accessed, and the domain name resolution request includes a domain name of the platform to be accessed.

Exemplarily, an execution subject of this embodiment may be a terminal device, or other apparatus or device that can execute the method of this embodiment. In this embodiment, the execution subject is the terminal device for description.

For this step, refer to step S201 shown in FIG. 6, which will not be repeated here.

S302, intercepting the access request when determining that the domain name of the platform to be accessed matches the preset attack platform feature library, where the attack platform feature library is used to indicate the domain name of at least one attack platform.

Exemplarily, after step 301, this step is executed. For this step, refer to step S202 shown in FIG. 6, which will not be repeated.

S303, sending the access request to the security server, where the access request includes the domain name of the platform to be accessed.

Exemplarily, for this step, refer to step S204 shown in FIG. 6, which will not be repeated.

S304, receiving detection information sent by the security server, where the detection information is used to indicate that the domain name of the platform to be accessed matches the attack platform feature library in the security server.

Exemplarily, for this step, refer to step S205 shown in FIG. 6, which will not be repeated.

S305, displaying a pop-up window interface, where the pop-up window interface has prompt information, and the prompt information is used to represent an attack from the attack platform has been received.

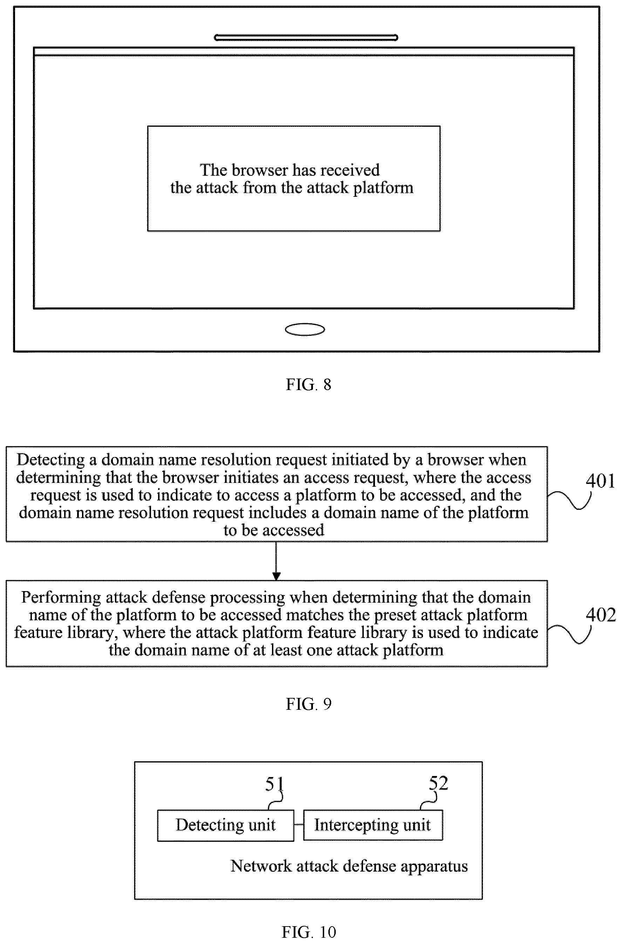

Exemplarily, the detection information returned by the security server may also indicate the terminal device to prompt; therefore, after receiving the detection information, if the detection information indicates that the domain name of the platform to be accessed matches the preset attack platform feature library and the detection information indicates that the domain name of the access request is not input by the user, the terminal device can determine that the browser of the terminal device has been attacked by the attack platform. And FIG. 8 is a schematic diagram of a pop-up window interface provided by an embodiment of the present application. As shown in FIG. 8, the terminal device displays a pop-up window interface, and there is prompt information in the pop-up window interface prompting the user that the browser of the terminal device has received the attack from the attack platform.

S306, detecting the location of the attack injection point according to the detection information, where the location of the attack injection point is used to indicate the location of the link information of the attack platform.

Exemplarily, for this step, refer to step S206 shown in FIG. 6, which will not be repeated.

S307, sending the location of the attack injection point to the security server for processing.

Exemplarily, for this step, refer to step S207 shown in FIG. 6, which will not be repeated.

S308, deleting the link information corresponding to the location of the attack injection point; or, receiving a deletion instruction sent by the security server and deleting the link information corresponding to the location of the attack injection point according to the deletion instruction.

Exemplarily, after step 306 or step 307, the terminal device has detected the location of the attack injection point. To avoid subsequent attacks, the link information at the location of the attack injection point can be deleted to avoid further attacks from the attack platform.

Alternatively, after step 307, after the terminal device sends the location of the attack injection point to the security server, the security server can indicate the terminal device to delete the link information at the location of the attack injection point; the security server sends a deletion instruction to the terminal device; and the terminal device deletes the link information at the location of the attack injection point, thereby avoiding further attacks from the attack platform.

In an example, after step S301, following can also be executed: when it is determined that the domain name of the platform to be accessed does not match the preset attack platform feature library, the access request is sent to the platform to be accessed.

Exemplarily, after step 301, if the terminal device or the domain name system server determines that the domain name of the platform to be accessed does not match the preset attack platform feature library, the terminal device determines that the platform to be accessed is not an attack platform, and can access the platform to be accessed directly. The terminal device can directly send the access request to the platform to be accessed to access the platform to be accessed.

In this embodiment, on the basis of the above embodiment, after the terminal device receives the detection information, if the detection information represents that the domain name of the platform to be accessed matches the attack platform feature library in the security server and the detection information indicates that the domain name of the access request is not input by the user, the terminal device displays a pop-up window interface having prompt information prompting the user that the browser of the terminal device has received the attack from the attack platform. Moreover, the terminal device has detected the location of the attack injection point, and can delete directly or according to the instruction of the security server, the link information at location of the attack injection point, so as to avoid further attacks from the attack platform.

FIG. 9 is a schematic diagram of Embodiment IV according to the present application. As shown in FIG. 9, the network attack defense method provided in this embodiment includes:
S401, detecting a domain name resolution request initiated by a browser when determining that the browser initiates an access request, where the access request is used to indicate to access a platform to be accessed, and the domain name resolution request includes a domain name of the platform to be accessed.

Exemplarily, the execution subject of this embodiment may be a terminal device, or other apparatus or device that can execute the method of this embodiment. In this embodiment, the execution subject is the terminal device for description.

For this step, refer to step S101 shown in FIG. 3, which will not be repeated herein.

S402, performing attack defense processing when determining that the domain name of the platform to be accessed matches the preset attack platform feature library, where the attack platform feature library is used to indicate the domain name of at least one attack platform.

Exemplarily, for whether the domain name of the platform to be accessed matches the preset attack platform feature library, please refer to the introduction of the above embodiment, which will not be repeated.

When determining that the domain name of the platform to be accessed matches the preset attack platform feature library, the terminal device can perform defense processing which includes, but is not limited to: intercepting the access request, closing the browser of the terminal device, and deleting the access request.

In this embodiment, when the access request is detected, the access request is not sent directly. If the web page of the terminal device has been injected with the malicious code, the malicious code will send an access request to the attack platform, and then the terminal device will obtain the attack logic of the attack platform. When an access request is detected, the domain name of the platform to be accessed in the domain name resolution request is firstly detected; when it is determined that the domain name of the platform to be accessed matches the attack platform feature library, the domain name carried in the domain name resolution request is determined to be the domain name of the attack platform, the platform to be accessed is determined to be the attack platform, and the attack platform and the XSS attack can be performed accurately. In this case, since the platform to be accessed is an attack platform, the access request will be sent to the attack platform, thereby making the attack platform attack the terminal device. To avoid this, the terminal device performs defensive processing to prevent malicious code from triggering the terminal device to send the access request to the attack platform, thereby avoiding getting the attack logic returned by the attack platform, and effectively processing and preventing the XSS attack.

FIG. 10 is a schematic diagram of Embodiment V according to the present application. As shown in FIG. 10, the network attack defense apparatus provided in this embodiment includes:
a detecting unit 51, configured to detect a domain name resolution request initiated by a browser when determining that the browser initiates an access request, where the access request is used to indicate to access a platform to be accessed, and the domain name resolution request includes a domain name of the platform to be accessed; and
an intercepting unit 52, configured to intercept the access request when determining that the domain name of the platform to be accessed matches a preset attack platform feature library, where the attack platform feature library is used to indicate a domain name of at least one attack platform.

The network attack defense apparatus of this embodiment can execute the technical solution in the above method, and its specific implementation process and technical principle are the same, which will not be repeated here.

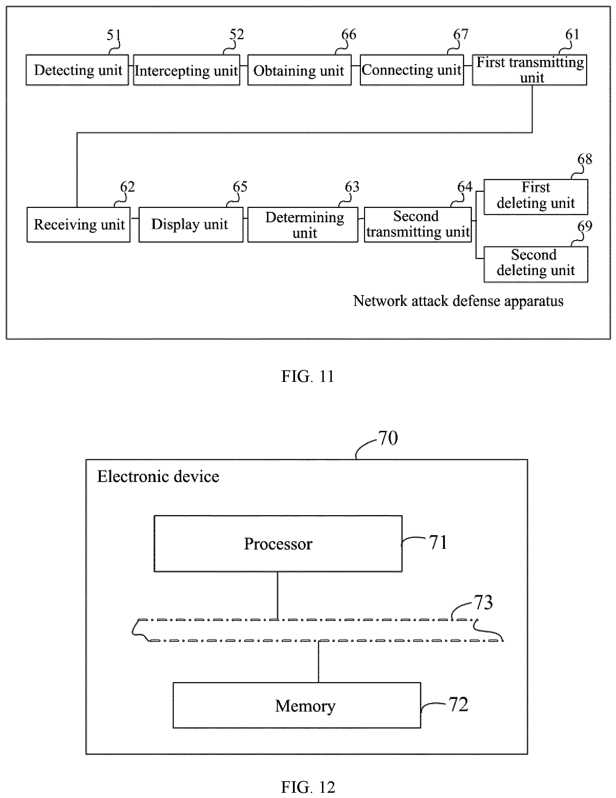

FIG. 11 is a schematic diagram of Embodiment VI according to the present application. As shown in FIG. 11, on the basis of the embodiment shown in FIG. 10, the network attack defense apparatus provided in this embodiment further includes:
a first transmitting unit 61, configured to send the access request to the security server after the intercepting unit 51 intercepts the access request, where the access request includes the domain name of the platform to be accessed;
a receiving unit 62, configured to receive detection information sent by the security server, where the detection information is used to indicate that the domain name of the platform to be accessed matches the attack platform feature library in the security server;
a determining unit 63, configured to detect the location of the attack injection point according to the detection information, where the location of the attack injection point is used to indicate the location of the link information of the attack platform; and
a second transmitting unit 64, configured to send the location of the attack injection point to the security server for processing.

In an example, the access request further includes indication information which is used for the source of the access request; and the detection information is also used to indicate that the domain name of the access request is not input by the user.

In an example, the determining unit 63 is specifically configured to:
when the link information of the attack platform is searched from the DOM tree of the web page, generate, according to the link information set, the location of the attack injection point; where the link information set includes link information of at least one attack platform, and the DOM tree includes link information of at least one platform.

In an example, the link information includes the uniform resource locator of the platform.

In an example, the location of the attack injection point is specifically used to indicate the location of the uniform resource locator of the attack platform in the DOM tree of the web page.

In an example, the detection information is also used to indicate the script code for detecting the location of the attack injection point.

In an example, the apparatus provided in this embodiment further includes:
a display unit 65, configured to display a pop-up window interface after the receiving unit 62 receives the detection information sent by the security server, where the pop-up window interface has prompt information, and the prompt information is used to represent that an attack by the attack platform is received.

In an example, the apparatus provided in this embodiment further includes:
an obtaining unit 66, configured to obtain the access address of the security server before the first transmitting unit 61 sends the access request to the security server, where the access address is obtained from a domain name system server, or the access address is stored locally; and
a connecting unit 67, configured to establish a connection with the security server according to the access address.

In an example, the apparatus provided in this embodiment further includes:
a first deleting unit 68, configured to delete the link information corresponding to the location of the attack injection point after the second transmitting unit 64 sends the location of the attack injection point to the security server for processing;
or, a second deleting unit 69, configured to receive the deletion instruction sent by the security server after the second transmitting unit 64 sends the location of the attack injection point to the security server for processing, and delete the link information corresponding to the location of the attack injection point according to the deletion instruction.

In an example, the intercepting unit 52 includes:
a transmitting module, configured to send a domain name resolution request to a domain name system server, where the domain name system server is configured with an attack platform feature library;
a receiving module, configured to receive the processing result sent by the domain name system server, where the processing result represents that the domain name of the platform to be accessed matches the preset attack platform feature library; and
an intercepting module, configured to intercept the access request based on the processing result.

In an example, the intercepting unit 52 is specifically configured to:
when determining that the locally pre-stored attack platform feature library has the domain name of the platform to be accessed, determine that the domain name of the platform to be accessed matches the attack platform feature library, and intercept the access request.

The network attack defense apparatus of this embodiment can execute the technical solution in the above method, and its specific implementation and technical principle are the same, which will not be repeated here.

FIG. 12 is a schematic diagram of Embodiment VII according to the present application. As shown in FIG. 12, the electronic device 70 in this embodiment may include a processor 71 and a memory 72.

The memory 72 is used to store programs; the memory 72 may include volatile memory (English: volatile memory), such as a random-access memory (English: random-access memory, abbreviation: RAM), a static random-access memory (English: static random-access memory, abbreviation: SRAM), a double data rate synchronous dynamic random access memory (English: Double Data Rate Synchronous Dynamic Random Access Memory, abbreviation: DDR SDRAM), etc.; and the memory may also include a non-volatile memory (English: non-volatile memory), such as a flash memory (English: flash memory). The memory 72 is used to store computer programs (such as application programs and functional modules that implement the above methods), computer instructions, etc., and the above computer programs, computer instructions, etc. may be partitioned and stored in one or more memories 72. In addition, the foregoing computer programs, computer instructions, data, etc. can be called by the processor 71.

The above computer programs, computer instructions, etc. may be partitioned and stored in one or more memories 72. In addition, the above computer programs, computer instructions, etc. can be called by the processor 71.

The processor 71 is used to execute a computer program stored in the memory 72 to implement each step in the method according to the above embodiment.

For details, refer to the related description in the foregoing method embodiment.

The processor 71 and the memory 72 may be independent structures, or may be an integrated structure integrated together. When the processor 71 and the memory 72 are independent structures, the memory 72 and the processor 71 may be coupled and connected through the bus 73.

The electronic device of this embodiment can execute the technical solution in the above method, and its specific implementation process and technical principle are the same, which will not be repeated here.

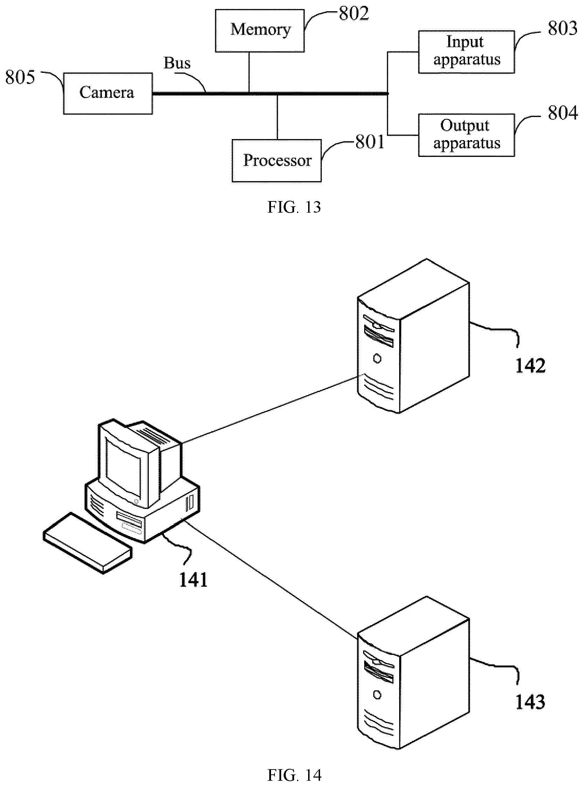

FIG. 13 is a schematic diagram of Embodiment VIII according to the present application. As shown in FIG. 13, FIG. 13 is a block diagram of an electronic device used to implement the network attack defense method of an embodiment of the present application. Electronic devices are intended to represent various forms of digital computers, such as laptop computers, desktop computers, workstations, personal digital assistants, servers, blade servers, mainframe computers, and other suitable computers. Electronic devices can also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present application described and/or required herein.

As shown in FIG. 13, the electronic device includes one or more processors 801, a memory 802, and interfaces for connecting various components, including a high-speed interface and a low-speed interface. The various components are connected to each other through different buses, and can be installed on a common motherboard or installed in other ways as required. The processor may process instructions executed in the electronic device, which includes instructions stored in or on the memory to display graphical information of the GUI on an external input/output apparatus (such as a display device coupled to an interface). In other implementations, multiple processors and/or multiple buses may be used with multiple memories and multiple memories if necessary. Similarly, multiple electronic devices can be connected, and each device provides some necessary operations (for example, as a server array, a group of blade servers, or a multi-processor system). In FIG. 13, a processor 801 is taken as an example.

The memory 802 is a non-transitory computer-readable storage medium provided by the present application. Where the memory stores instructions that can be executed by at least one processor, so that at least one processor executes the network attack defense method provided in the present application. The non-transitory computer-readable storage medium of the present application stores computer instructions, and the computer instructions are used to make a computer execute the network attack defense method provided by the present application.

As a non-transitory computer-readable storage medium, the memory 802 can be used to store non-transitory software programs, non-transitory computer-executable programs and modules, such as program instructions/modules corresponding to the network attack defense method in the embodiment of the present application (for example, the detecting unit 51 and the intercepting unit 52 shown in FIG. 10). The processor 801 executes various functional applications and data processing of the server by running non-transitory software programs, instructions, and modules stored in the memory 802, that is, the network attack defense method in the above method embodiment is achieved.

The memory 802 may include a program storage area and a data storage area, where the program storage area may store an operating system and an application program required by at least one function; and the data storage area may store data, etc., created according to the use of the electronic device for realizing the network attack defense method. In addition, the memory 802 may include a high-speed random access memory, and may also include a non-transitory memory, such as at least one magnetic disk storage device, a flash memory device, or other non-transitory solid-state storage devices. In some embodiments, the memory 802 may optionally include a memory remotely provided with respect to the processor 801, and these remote memories may be connected to the electronic device used for implementing the network attack defense method through a network. Examples of the above networks include, but are not limited to, the Internet, corporate intranets, local area networks, mobile communication networks, and combinations thereof.

The electronic device of the network attack defense method may further include: an input apparatus 803 and an output apparatus 804. The processor 801, the memory 802, the input apparatus 803 and the output apparatus 804 may be connected by a bus or in other ways, and the connection by a bus is taken as an example in FIG. 13.

The input apparatus 803 can receive input digital or character information, and generate key signal input related to user setting and function control of the electronic device used to implement the network attack defense method, for example, a touch screen, a keypad, a mouse, a track pad, a touchpad, a pointing stick, one or more mouse buttons, a trackball, a joystick and other input apparatuses. The output apparatus 804 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display and a plasma display. In some implementations, the display device may be a touch screen.

Various implementations of the systems and technologies described herein can be implemented in a digital electronic circuit system, an integrated circuit system, an application ASIC (application specific integrated circuit), computer hardware, firmware, software, and/or combinations thereof. These various implementations may include: implemented in one or more computer programs, where the one or more computer programs may be executed and/or interpreted on a programmable system including at least one programmable processor, the programmable processor may be a dedicated or general programmable processor, and may receive data and instructions from a storage system, at least one input apparatus, and at least one output apparatus and transmit the data and instructions to the storage system, the at least one input apparatus and the at least one output apparatus.

These computing programs (also called programs, software, software applications, or codes) include machine instructions of programmable processors, and can use high-level process and/or object-oriented programming language, and/or assembly/machine language to implement these computing programs. As used herein, the terms "machine-readable medium" and "computer-readable medium" refer to any computer program product, device, and/or apparatus used to provide machine instructions and/or data to a programmable processor (for example, magnetic disks, optical disks, memories, programmable logic devices (PLD)), which includes machine-readable media that receive machine instructions as machine-readable signals. The term "machine-readable signal" refers to any signal used to provide machine instructions and/or data to a programmable processor.

In order to provide interaction with users, the systems and techniques described here can be implemented on a computer, and the computer has: a display apparatus (for example, a CRT (cathode ray tube) or LCD (liquid crystal display) monitor) for displaying information to the user; as well as a keyboard and a pointing apparatus (for example, a mouse or a trackball), the user can provide input to the computer through the keyboard and the pointing apparatus. Other types of apparatus can also be used to provide interaction with users. For example, the feedback provided to the user can be any form of sensory feedback (for example, visual feedback, auditory feedback or tactile feedback); and any form (including sound input, voice input or tactile input) can be used to receive input from the user.

The systems and technologies described herein can be implemented in a computing system that includes back-end components (for example, as a data server), or a computing system that includes middleware components (for example, an application server), or a computing system that includes front-end components (for example, a user computer with a graphical user interface or web browser, through which the user can interact with the implementation of the system and technology described herein), or a computing system that includes any combination of such back-end components, middleware components, or front-end components. The components of the system can be connected to each other through any form or medium of digital data communication (for example, a communication network). Examples of communication networks include: local area network (LAN), wide area network (WAN) and the Internet.

The computer system can include a client and a server. The client and server are generally far away from each other and usually interact through a communication network. The relationship between the client and the server is generated through computer programs running on the corresponding computers and having a client-server relationship with each other.

According to the technical solution of the embodiment of the present application, when the access request is detected, the access request is not sent out directly. If the web page of the terminal device has been entered with a malicious code, the malicious code will send the access request to the attack platform, and then the terminal device will get the attack logic of the attack platform. When an access request is detected, the domain name of the platform to be accessed in the domain name resolution request is firstly detected; when it is determined that the domain name of the platform to be accessed matches the attack platform feature library, the domain name carried in the domain name resolution request is determined to be the domain name of the attack platform, the platform to be accessed is determined to be the attack platform, and the attack platform and the XSS attack can be performed accurately. In this case, since the platform to be accessed is an attack platform, the access request will be sent to the attack platform, thereby making the attack platform attack the terminal device. To avoid this, the terminal device directly intercepts the access request to prevent malicious code from triggering the terminal device to send the access request to the attack platform, thereby avoiding getting the attack logic returned by the attack platform, and effectively processing and preventing the XSS attack.

FIG. 14 is a schematic diagram of Embodiment IX according to the present application. As shown in FIG. 14, an embodiment of the present application provides a network attack defense system. The network attack defense system includes an electronic device 141 shown in FIG. 12 or FIG. 13 and a domain name system server 142.

The electronic device 141 is configured to detect a domain name resolution request initiated by a browser when determining that the browser initiates an access request, where the access request is used to indicate to access a platform to be accessed, and the domain name resolution request includes a domain name of the platform to be accessed, and to send the domain name resolution request to the domain name system server 142.

The domain name system server 142 is configured to generate a processing result according to the domain name resolution request, where the processing result represents that the domain name of the platform to be accessed matches the preset attack platform feature library, and the domain name system server 142 is configured with the attack platform feature database.

The electronic device 141 is further configured to receive the processing result sent by the domain name system server, and intercept the access request according to the processing result.

In an example, the network attack defense system further includes a security server 143; the security server 143 is configured to receive an access request sent by the electronic device 141, where the access request includes the domain name of the platform to be accessed; generate, according to the access request, the detection information, where the detection information is used to indicate that the domain name of the platform to be accessed matches the attack platform feature library in the security server, and the detection information is used to determine the location of the attack injection point, where the location of the attack injection point is used to indicate the location of the link information of the attack platform; send the detection information to the electronic device 141; and receive the location of the attack injection point sent by the electronic device 141, and process the location of the attack injection point.

The network attack defense system of this embodiment can execute the technical solution in the above method, and its specific implementation process and technical principle are the same, which will not be repeated here.

It should be understood that steps can be reordered, added or deleted using the various forms of processes shown above. For example, the steps recorded in the present application can be performed in parallel, sequentially or in different orders, as long as the desired result of the technical solution disclosed in the present application can be achieved, and there is no limitation here.

The above specific implementations do not constitute a limitation on the scope of protection of the present application. Those skilled in the art should understand that various modifications, combinations, sub-combinations, and substitutions can be made according to design requirements and other factors. Any modification, equivalent substitution and improvement made within the spirit and principle of the present application shall be included in the scope of protection of the present application.

## Claims

1. A network attack defense method, comprising:
detecting a domain name resolution request initiated by a browser when determining that the browser initiates an access request, wherein the access request is used to indicate to access a platform to be accessed, and the domain name resolution request comprises a domain name of the platform to be accessed; and
intercepting the access request when determining that the domain name of the platform to be accessed matches a preset attack platform feature library, wherein the attack platform feature library is used to indicate a domain name of at least one attack platform.

2. The method according to claim 1, wherein after intercepting the access request, further comprises:
sending the access request to a security server, wherein the access request comprises the domain name of the platform to be accessed;
receiving detection information sent by the security server, wherein the detection information is used to indicate that the domain name of the platform to be accessed matches the attack platform feature library in the security server;
detecting a location of an attack injection point according to the detection information, wherein the location of the attack injection point is used to indicate a location of link information of the attack platform; and
sending the location of the attack injection point to the security server for processing.

3. The method according to claim 2, wherein the access request further comprises indication information which is used for a source of the access request; and the detection information is further used to indicate that the domain name of the access request is not input by a user.

4. The method according to claim 2 or 3, wherein the detecting a location of an attack injection point comprises:
generating the location of the attack injection point when the link information of the attack platform is searched from a document object model tree of a web page according to a link information set;
wherein the link information set comprises the link information of at least one attack platform, and the document object model tree comprises link information of at least one platform.

5. The method according to claim 4, wherein the link information comprises a uniform resource locator of a platform.

6. The method according to claim 5, wherein the location of the attack injection point is specifically used to indicate the location of the uniform resource locator of the attack platform in the document object model tree of the web page.

7. The method according to any one of claims 2 to 6, wherein the detection information is further used to indicate a script code for detecting the location of the attack injection point.

8. The method according to any one of claims 2 to 7, wherein after receiving detection information sent by the security server, further comprises:
displaying a pop-up window interface, wherein the pop-up window interface has prompt information, and the prompt information is used to represent that an attack from the attack platform has been received.

9. The method according to any one of claims 2 to 8, wherein before sending the access request to the security server, further comprises:
obtaining an access address of the security server, wherein the access address is obtained from a domain name system server, or the access address is stored locally; and
establishing a connection with the security server according to the access address.

10. The method according to any one of claims 2 to 9, wherein after sending the location of the attack injection point to the security server for processing, further comprises:
deleting the link information corresponding to the location of the attack injection point;
or, receiving a deletion instruction sent by the security server, and deleting the link information corresponding to the location of the attack injection point according to the deletion instruction.

11. The method according to any one of claims 1 to 10, wherein intercepting the access request when determining that the domain name of the platform to be accessed matches a preset attack platform feature library comprises:
sending a domain name resolution request to the domain name system server, wherein the domain name system server is configured with the attack platform feature library;
receiving a processing result sent by the domain name system server, wherein the processing result represents that the domain name of the platform to be accessed matches the preset attack platform feature library; and
intercepting the access request according to the processing result.

12. The method according to any one of claims 1 to 10, wherein intercepting the access request when determining that the domain name of the platform to be accessed matches a preset attack platform feature library comprises:
after determining that the locally pre-stored attack platform feature library has the domain name of the platform to be accessed, determining that the domain name of the platform to be accessed matches the attack platform feature library, and intercepting the access request.

13. A network attack defense apparatus, comprising:
a detecting unit, configured to detect a domain name resolution request initiated by a browser when determining that the browser initiates an access request, wherein the access request is used to indicate to access a platform to be accessed, and the domain name resolution request comprises a domain name of the platform to be accessed; and
an intercepting unit, configured to intercept the access request when determining that the domain name of the platform to be accessed matches a preset attack platform feature library, wherein the attack platform feature library is used to indicate a domain name of at least one attack platform.

14. The apparatus according to claim 13, wherein the apparatus further comprises:
a first transmitting unit, configured to send the access request to a security server after the intercepting unit intercepts the access request, wherein the access request comprises the domain name of the platform to be accessed;
a receiving unit, configured to receive detection information sent by the security server, wherein the detection information is used to indicate that the domain name of the platform to be accessed matches the attack platform feature library in the security server;
a determining unit, configured to detect a location of an attack injection point according to the detection information, wherein the location of the attack injection point is used to indicate a location of link information of the attack platform; and
a second transmitting unit, configured to send the location of the attack injection point to the security server for processing.

15. The apparatus according to claim 14, wherein the access request further comprises indication information, which is used for a source of the access request; and the detection information is further used to indicate that the domain name of the access request is not input by a user.

16. The apparatus according to claim 14 or 15, wherein the determining unit is specifically configured to:
generate the location of the attack injection point when the link information of the attack platform is searched from a document object model tree of a web page according to a link information set;
wherein the link information set comprises the link information of at least one attack platform, and the document object model tree comprises link information of at least one platform.

17. The apparatus according to claim 16, wherein the link information comprises a uniform resource locator of a platform.

18. The apparatus according to claim 17, wherein the location of the attack injection point is specifically configured to indicate the location of the uniform resource locator of the attack platform in the document object model tree of the web page.

19. The apparatus according to any one of claims 14 to 18, wherein the detection information is further configured to indicate a script code for detecting the location of the attack injection point.

20. The apparatus according to any one of claims 14 to 19, wherein the apparatus further comprises:
a display unit, configured to display a pop-up window interface after the receiving unit receives the detection information sent by the security server, wherein the pop-up window interface has prompt information, and the prompt information is used to represent that an attack from the attack platform has been received.

21. The apparatus according to any one of claims 14 to 20, wherein the apparatus further comprises:
an obtaining unit, configured to obtain an access address of the security server before the first transmitting unit sends the access request to the security server, wherein the access address is obtained from a domain name system server, or the access address is stored locally; and
a connecting unit, configured to establish a connection with the security server according to the access address.

22. The apparatus according to any one of claims 14 to 21, wherein the apparatus further comprises:
a first deleting unit, configured to delete the link information corresponding to the location of the attack injection point after the second transmitting unit sends the location of the attack injection point to the security server for processing;
or, a second deleting unit, configured to receive a deletion instruction sent by the security server after the second transmitting unit sends the location of the attack injection point to the security server for processing, and delete the link information corresponding to the location of the attack injection point according to the deletion instruction.

23. The apparatus according to any one of claims 13 to 22, wherein the intercepting unit comprises:
a transmitting module, configured to send a domain name resolution request to the domain name system server, wherein the domain name system server is configured with the attack platform feature library;
a receiving module, configured to receive a processing result sent by the domain name system server, wherein the processing result represents that the domain name of the platform to be accessed matches the preset attack platform feature library; and
an intercepting module, configured to intercept the access request based on the processing result.

24. The apparatus according to any one of claims 13 to 22, wherein the intercepting unit is specifically configured to:
after determining that the locally pre-stored attack platform feature library has the domain name of the platform to be accessed, determine that the domain name of the platform to be accessed matches the attack platform feature library, and intercept the access request.

25. An electronic device, comprising:
at least one processor; and
a memory communicatively connected with the at least one processor; wherein,
the memory stores instructions executable by the at least one processor, and the instructions are executed by the at least one processor to enable the at least one processor to perform the method according to any one of claims 1 to 12.

26. A non-transitory computer-readable storage medium storing computer instructions, wherein the computer instructions are used to cause the computer to perform the method according to any one of claims 1 to 12.

27. A network attack defense system, wherein the system comprises the electronic device according to claim 25 and a domain name system server;
wherein the electronic device is configured to detect a domain name resolution request initiated by a browser when determining that the browser initiates an access request, wherein the access request is used to indicate to access a platform to be accessed and the domain name resolution request comprises a domain name of the platform to be accessed, and to send the domain name resolution request to the domain name system server;
the domain name system server is configured to generate a processing result according to the domain name resolution request, wherein the processing result represents that the domain name of the platform to be accessed matches a preset attack platform feature library, and the domain name system server is configured with the attack platform feature library; and
the electronic device is further configured to receive the processing result sent by the domain name system server, and intercept the access request according to the processing result.

28. The network attack defense system according to claim 27, wherein the network attack defense system further comprises a security server; and
the security server is configured to receive the access request sent by the electronic device, wherein the access request comprises the domain name of the platform to be accessed; generate detection information according to the access request, wherein the detection information is used to indicate that the domain name of the platform to be accessed matches the attack platform feature library in the security server, and the detection information is used to determine a location of an attack injection point, wherein the location of the attack injection point is used to indicate the location of link information of the attack platform; send the detection information to the electronic device; and receive the location of the attack injection point sent by the electronic device, and process the location of the attack injection point.

29. A network attack defense method, comprising:
detecting a domain name resolution request initiated by a browser when determining that the browser initiates an access request, wherein the access request is used to indicate to access a platform to be accessed, and the domain name resolution request comprises a domain name of the platform to be accessed; and
performing attack defense processing when determining that the domain name of the platform to be accessed matches a preset attack platform feature library, wherein the attack platform feature library is used to indicate a domain name of at least one attack platform.

30. A computer program, wherein the computer program comprises a program code, when the computer runs the computer program, the program code performs the method according to any one of claims 1 to12 or claim 29.
